# EUROPEAN PATENT APPLICATION

(11) **EP 4 653 290 A1**
(43) Date of publication of application: **26.11.2025**
(21) Application number: 24177050.2
(22) Date of filing: 21.05.2024
(51) Int. Cl.: B62D 13/06, B62D 15/02

(54) **COMPUTER SYSTEM AND METHOD FOR DETERMINING AND DISPLAYING PIVOT POINT OF A VEHICLE**

(71) Applicant: VOLVO TRUCK CORPORATION, 405 08 Göteborg (SE)
(72) Inventor: BERNE, Nicolas, 436 44 ASKIM (SE); ONUKI, Ciro, 80220150 Curitiba (BR)
(74) Representative: Ström & Gulliksson AB

(57) **Abstract**

Present disclosure relates to a computer system (700) comprising processing circuitry (702) configured to process first parameter data (410A) associated with a vehicle (10) and the operation of said vehicle to determine a first pivot point (P1) of the vehicle, display a first pivot point indicia (PI1) associated with the first pivot point (P1), process second parameter data (410B) associated with the vehicle (10) and the operation of said vehicle to determine a second pivot point (P2) of the vehicle changed from the first pivot point (P1), and display a second pivot point indicia (PI2) associated with the second pivot point (P2).

(Figure 2)

## Description

### TECHNICAL FIELD

The disclosure relates generally to driving assistance systems. In particular aspects, the disclosure relates to a computer system and method for determining and displaying a pivot point of a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

In the field of vehicles and in particular heavy-duty vehicles, the pivot point of the steering of the vehicle may shift depending on whether or not the driver reverses or drives forward. This may particularly be the case where the vehicle includes one or more articulated trailers. During parking of the vehicle or reversing the vehicle to a dock, the driver may have to drive the vehicle back and forth making it difficult to keep track of where the pivot point of the vehicle is located.

### SUMMARY

According to a first aspect of the disclosure, a computer system is provided. The computer system comprises processing circuitry configured to process first parameter data associated with a vehicle and a first operation of said vehicle to determine a first pivot point of the vehicle; display a first pivot point indicia associated with the first pivot point; process second parameter data associated with the vehicle and a second operation of said vehicle to determine a second pivot point of the vehicle changed from the first pivot point, and display a second pivot point indicia associated with the second pivot point.. The first aspect of the disclosure may seek to achieve a computer system allowing for a more user friendly and time efficient maneuvering of the vehicle. A technical benefit may include better indicating the pivot point of the vehicle shifting, allowing for safer, more time efficient and more user friendly maneuvering of the vehicle, particularly during parking or reversing to a dock.

Optionally in some examples, including in at least one preferred example, the vehicle may comprise a trailer.

Optionally in some examples, including in at least one preferred example, the vehicle may comprise one or more articulated trailer and the processing circuitry is configured to determine a first and second pivot point and display a first and second pivot point indicia for each articulated trailer. A technical benefit may include a more time efficient, user friendly and safe maneuvering of a vehicle further taking into account a plurality of articulated trailers.

Optionally in some examples, including in at least one preferred example, the processing circuitry may be configured to process the first and second parameter data to identify a current steering angle of the vehicle and a current driving direction of the vehicle, and wherein the processing circuitry is configured to determine the first and second pivot point based on the current steering angle and the current driving direction of the vehicle. A technical benefit may include that the parameters allows for a more accurate determining pivot point of the vehicle.

Optionally in some examples, including in at least one preferred example, the processing circuitry may be configured to process the first and second parameter data to identify one or more load indicator value associated with the load distribution of the vehicle and based on said one or more load indicator value, determine a load distribution model of the vehicle, and wherein the processing circuitry is configured to determine the first and second pivot point based on said load distribution model. A technical benefit may include that the load distribution model further allows for the pivot point to be determined based on how the vehicle and in particular the vehicle trailers are loaded, allowing for a more accurate determining of the point.

Optionally in some examples, including in at least one preferred example, the one or more load indicator value may comprise at least one of a value associated with the type of wheel axles of the vehicle, number of wheel axles of the vehicle, the position of the wheel axles of the vehicle, the load on the wheel axles of the vehicle, the status of one or more liftable wheel axles of the vehicle, the number of wheels of the vehicle or the tire pressure of the tires of the vehicle.

Optionally in some examples, including in at least one preferred example, the vehicle comprises may comprise a trailer with at least two rear wheel axles and the processing circuitry is configured to process the first and second parameter data to identify a first load indicator value associated with the load on a first rear wheel axle of the trailer and a second load indicator value associated with the load on a second rear wheel axle of the trailer and determine the first and second pivot point based on said first and second load indicator value. A technical benefit may include that a simple and non-complex manner of determining the pivot point may be achieved.

Optionally in some examples, including in at least one preferred example, the processing circuitry may be configured to process the first and second parameter data to identify one or more geometrical indicator value associated with the geometry of the vehicle and based on said one or more geometrical indicator value determine a geometrical model of the vehicle. The processing circuitry may be further configured to determine the first and second pivot point based on said geometrical model. A technical benefit may include that the geometrical model may serve to improve the accuracy of the determining of the pivot point of the vehicle.

Optionally in some examples, including in at least one preferred example, the computer system may further comprise a user interface comprising a display device. The processing circuitry may be configured to display the first and second pivot point indicia on the display device.

According to a second aspect of the disclosure, a vehicle comprising the computer system according to any of the examples described herein may be provided. The second aspect of the disclosure may seek to achieve a vehicle which is more user friendly and time efficient to maneuver. A technical benefit may include that the driver may be provided with an indication of the pivot point of the vehicle shifting, allowing for safer, more time efficient and more user friendly maneuvering of the vehicle, particularly during parking or reversing to a dock.

Optionally in some examples, including in at least one preferred example, the vehicle may further comprise a camera monitoring system configured to monitor a zone in connection to the vehicle and operatively connected to the computer system, wherein the processing circuitry is configured to obtain an image feed from the camera monitoring system and the processing circuitry is configured to display the first and second pivot point indicia as an overlay in said image feed. A technical benefit may include that the pivot point indicia may be presented to the driver in an intuitive manner.

Optionally in some examples, including in at least one preferred example, the camera monitoring system may form a part of a digital side view mirror system and/or a rearview mirror system. A technical benefit may include that the driver may utilize an intuitive way of being presented with the pivot point indicia, e.g. by means of looking at a rearview or side view mirror.

Optionally in some examples, including in at least one preferred example, the computer system may comprise a user interface comprising a display device, wherein the processing circuitry may be configured to display the first and second pivot point indicia on said display device. The vehicle may further comprise a camera monitoring system configured to monitor a zone in connection to the vehicle and operatively connected to the user interface, wherein the display device may be configured to present an image feed from the camera monitoring system and the processing circuitry may be configured to display the first and second pivot point indicia as an overlay in said image feed. The camera monitoring system may form a part of a digital side view mirror and/or rearview mirror system. The vehicle may comprise a trailer and a tractor, wherein the trailer may be connected to the tractor via an articulated connection. The processing circuitry may be configured to process the first and second parameter data to identify a current steering angle of the vehicle and a current driving direction of the vehicle and identify one or more load indicator value associated with the current load distribution of the vehicle and based on said one or more load indicator value determine a load distribution model of the vehicle. The processing circuitry may be configured to determine the first and second pivot point based on the current steering angle and the current driving direction of the vehicle and said load distribution model. A technical benefit may include that the driver may be provided with an indication of the pivot point of the vehicle shifting, allowing for safer, more time efficient and more user friendly maneuvering of the vehicle, particularly during parking or reversing to a dock.

According to a third aspect of the disclosure, a computer-implemented method may be provided. The computer-implemented method comprises processing, by processing circuitry of a computer system, first parameter data associated with a vehicle and a first operation of the vehicle to determine a first pivot point of the vehicle; displaying, by the processing circuitry, a first pivot point indicia associated with the first point; processing, by the processing circuitry, second parameter data associated with the vehicle and a second operation of the vehicle to determine a second pivot point of the vehicle changed from the first pivot point, and displaying, by the processing circuitry, a second pivot point indicia associated with the second pivot point. The third aspect of the disclosure may seek to achieve a method for operating a vehicle allowing for a more user friendly and time efficient maneuvering of the vehicle. A technical benefit may include that the driver may be provided with an indication of the pivot point of the vehicle shifting, allowing for safer, more time efficient and more user friendly maneuvering of the vehicle, particularly during parking or reversing to a dock.

Optionally in some examples, including in at least one preferred example, the vehicle may comprise one or more articulated trailer and the method may further comprise determining, by the processing circuitry, a first and second pivot point for each articulated trailer; and displaying, by the processing circuitry, a first and second pivot point indicia for each articulated trailer. A technical benefit may include a more time efficient, user friendly and safe maneuvering of a vehicle further taking into account a plurality of articulated trailers.

Optionally in some examples, including in at least one preferred example, the method may further comprise processing, by the processing circuitry, the first and second parameter data to identify a current steering angle of the vehicle and a current driving direction of the vehicle, and determining, by the processing circuitry, the first and second pivot point based on the current steering angle and the current driving direction of the vehicle. A technical benefit may include that the parameters allows for a more accurate determining pivot point of the vehicle.

Optionally in some examples, including in at least one preferred example, the method may further comprise processing, by the processing circuitry, the first and second parameter data to identify one or more load indicator value associated with the current load distribution of the vehicle; determining, by the processing circuitry, a load distribution model of the vehicle based on the one or more load indicator value; and determining, by the processing circuitry, the first and second pivot point based on the load distribution model. A technical benefit may include that the load distribution model further allows for the pivot point to be determined based on how the vehicle and in particular the vehicle trailers are loaded, allowing for a more accurate determining of the point.

Optionally in some examples, including in at least one preferred example, the method may further comprise processing, by the processing circuitry, the first and second parameter data to identify one or more geometrical indicator value associated with the geometry of the vehicle; determining, by the processing circuitry, a geometrical model of the vehicle based on said one or more geometrical indicator value; and determining, by the processing circuitry, the first and second pivot point based on said geometrical model. A technical benefit may include that the geometrical model may serve to improve the accuracy of the determining of the pivot point of the vehicle.

According to a fourth aspect of the disclosure, a computer program may be provided. The computer program may comprise program code for performing when executed by the processing circuitry, the method according to any of the examples described herein.

According to a fifth aspect of the disclosure, a non-transitory computer-readable storage medium may be provided. The non-transitory computer-readable storage medium may comprise instructions which when executed by the processing circuitry, may cause the processing circuitry to perform the method according to any of the examples described herein.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary vehicle according to an example.
**FIG. 2** is a schematic system diagram of a control system according to an example.
**FIG. 3** is a schematic system diagram of the control system of **FIG. 2** according to a more detailed example.
**FIG. 4** is schematic block diagram of a control system according to an example.
**FIG. 5** is a schematic block diagram of a control system and a camera monitoring system according to an example.
**FIG. 6** is a schematic block diagram of the camera monitoring system of **FIG. 5** in further detail.
**FIG. 7** is a flow chart of a method for determining a pivot point according to an example.
**FIG. 8** is a flow chart of a more detailed method for determining a pivot point according to an example.
**FIG. 9** is a flow chart of a more detailed method for determining a pivot point according to an example.
**FIG. 10** is a top view of the operation of a vehicle according to one example.
**FIG. 11** is a top view of the operation of a vehicle according to one example.
FIG. 12A-B are exemplary driver views from a vehicle according to one example.
**FIG. 13** is an exemplary schematic diagram of a computer program product according to an example.
**FIG. 14** is another view of **FIG. 2** according to an example.
**FIG. 15** is a flow chart of an exemplary method for determining a pivot point according to an example.
**FIG. 16** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

The examples presented herein provide a solution to improve the speed and safety of the vehicle, in particular heavy duty vehicles such as trucks etc., which are subjected to the pivot point shifting during operation. By presenting the driver indications of the pivot point of the vehicle shifting, the driver may take this into account during maneuvering of the vehicle, in particular during parking or reversing towards a loading dock.

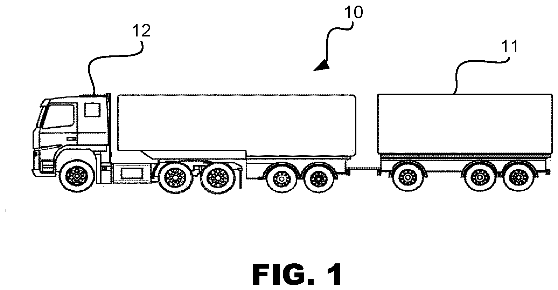

**FIG. 1** is an exemplary side view of a vehicle **10** according to one example. The vehicle **10,** herein the form of a truck, may or may not be an articulated vehicle. The truck **10** comprises a tractor **12** and a trailer **11** being pulled by the tractor **12.** The vehicle **10** is configured to present visual indications representing a pivot point of the vehicle **10,** as will be described further in the following.

A pivot point is herein defined as current set point on the vehicle around which the vehicle rotates during turning. The pivot point will remain stationary relative to the vehicle during the turning operation. Commonly, in vehicles with two axles, the pivot point is located at the center of the rear axle. However, this is not always the case, In particular not for vehicles with more than two axles.

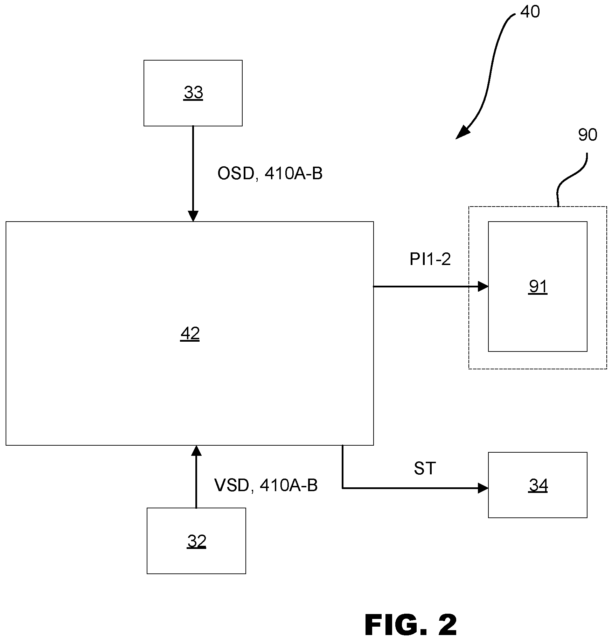

**FIG. 2** shows a vehicle **10** in terms of a system diagram of an example of a control system **40** for providing the visual indication representing the pivot point of the vehicle **10.**

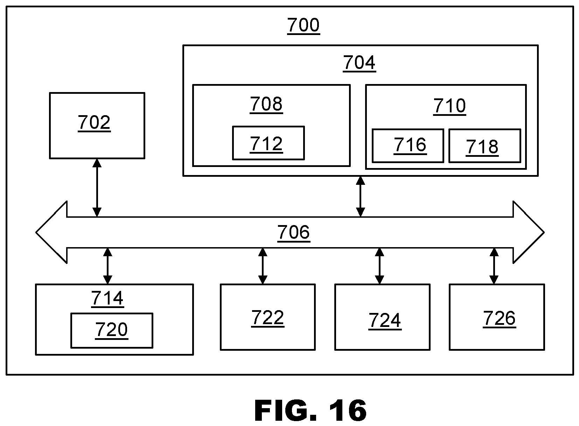

The control system **40** comprises one or more control units **42.** The one or more control units **42** is configured to receive data, and to process the data in order to determine the required vehicle characteristics. The one or more control units **42** may be implemented as a processing circuitry **702,** see **FIG. 16****.**

The control system **40** is configured to process parameter data **410** associated with the vehicle **10** and the operation of the vehicle **10.** The control system **40** may be configured to receive said parameter data **410** to determine the pivot point **P** of the vehicle **10.** The one or more control units **42** may be configured to process the parameter data **410** and receive said parameter data **410** to determine the pivot point **P** of the vehicle **10.**

The one or more control units **42** may be in communication with a vehicle settings collector **32.** The vehicle settings collector **32** is configured to store vehicle settings data **VSD,** and to communicate, preferably in real time, the vehicle settings data **VSD** to the one or more control units **42.** The vehicle settings data **VSD** may e.g. comprise information relating to fixed vehicle parameters such as vehicle length, tractor unit length, trailer length, fifth wheel position, vehicle width, tractor width, trailer width, tire dimensions, etc.. The parameter data **410** may thus comprise the vehicle settings data **VSD.**

The one or more control units **42** may be in communication with a vehicle operations collector **33.** The vehicle operations collector **33** may be configured to obtain operational data **OSD** associated with the operation of the vehicle **10** such as the speed of the vehicle, the steering angle of the vehicle, the angle of the one or more of the trailers of the vehicle etc. The parameter data **410** may thus comprise the operational data **OSD.**

The one or more control units **42** is configured to process the parameter data **410** and to determine the pivot point **P** of the vehicle **10** and display a pivot point indicia **PI** associated with the pivot point **P,** as will be further described below. In particular, the pivot point **P** may be determined based on the vehicle settings data **VSD** and the operational data **OSD**

The pivot point indicia **PI** for the vehicle **10** is communicated by the one or more control units **42.** As shown in **FIG. 2****,** the pivot point indicia **PI** is communicated by the one or more control units **42** to a user interface **90.** The user interface **90** may comprise a display device **91.** The display device **91** may be configured to display the pivot point indicia **PI.** The one or more control units **42** may be configured to display the pivot point indicia **PI** on the display device **91.** The display device **91** may e.g. comprise a head-up display HUD or an augmented reality display configured to display visual information. The visual information may comprise the pivot point indicia **PI.**

The one or more control units **42** may be configured to determine a change in the pivot point **P** of the vehicle **10.** Accordingly, the one or more control units **42** may be configured to process first parameter data **410A,** determine a first pivot point **P1** of the vehicle **10** and display a first pivot point indicia **PI1** associated with the first pivot point **P1.** Further, the one or more control units **42** may be configured to process second parameter data **410B,** determine a second pivot point **P2** of the vehicle **10** changed from the first pivot point **P1** and display a second pivot point indicia **PI2** associated with the second pivot point **P2.** The one or more control units **42** may thus be configured to based on the parameter data **410** determine a change in the pivot point **P** of the vehicle **10** and display a pivot point indicia **PI** based on said change of pivot point **P.**

The first parameter data **410A** may be associated with the vehicle **10** and a first operation of the vehicle **10.** The second parameter data **410B** may be associated with the vehicle **10** and a second operation of the vehicle **10.**

The first parameter data **410A** may be parameter data associated with the vehicle **10** and the first operation of the vehicle **10** at a first point in time and the second parameter data **410B** may be parameter data associated with the vehicle **10** and the second operation of the vehicle **10** at a second point in time distinguished from the first point in time.

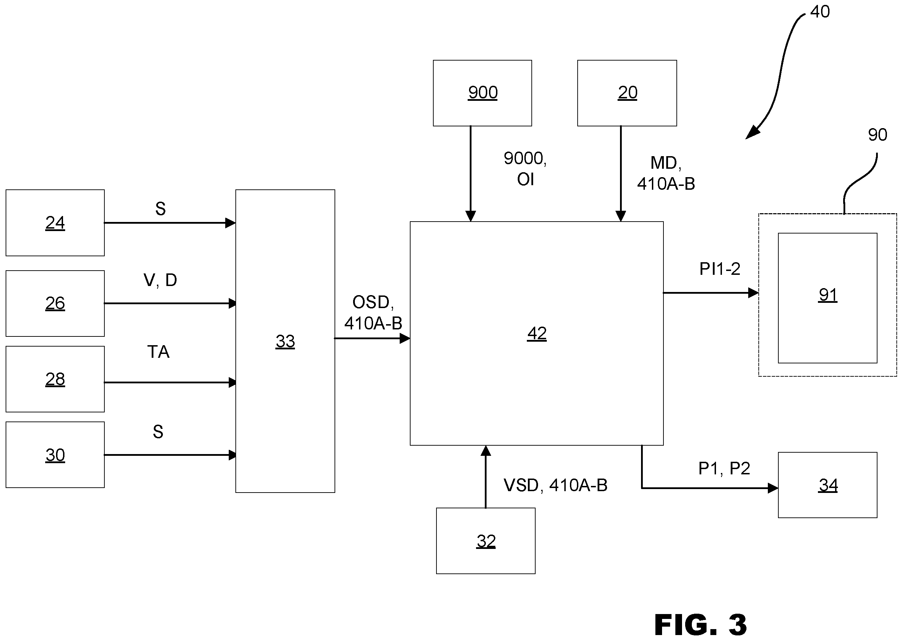

**FIG. 3** shows the vehicle **10** of **FIG.2** according to an example in terms of a system diagram of a control system **40** for providing the visual indication representing the pivot point of the vehicle **10.**

The control system **40** comprises the one or more control units **42.** The one or more control units **42** is configured to receive data, and to process the data in order to determine the required vehicle characteristics. The one or more control units **42** may be implemented as a processing circuitry **702,** see **FIG. 16****.**

In the depicted example, the one or more control unit **42** may be configured to be operatively connected to an adaptive steering system **34** of the vehicle **10.** The pivot point **P** may be communicated to the adaptive steering system **34.** The adaptive steering system **34** may also receive real-time information about the actual course of the vehicle **10,** for example by receiving operational data **OSD** from the vehicle operations collector **33.** If the actual course of the vehicle **10** departs from a suggested trajectory based on the determined pivot point **P,** the adaptive steering system **34** may control a steering wheel feedback to the driver, thereby directing the driver to follow the suggested trajectory rather than choosing another route.

The operational data **OSD** may comprise first operational data associated with the first operation of the vehicle **10** and second operational data associated with the second operation of the vehicle **10.**

The one or more control units **42** may be configured to process the parameter data **410** to identify a current steering angle and a driving direction of the vehicle **1.** The one or more control units **42** may be configured to determine the pivot point **P** based on the current steering angle and the current driving direction of the vehicle **10.** In one example, the one or more control units **42** may be configured to process the operational data **OSD** to identify said current steering angle and driving direction.

The one or more control units **42** may be configured to obtain the operational data **OSD** via the vehicle operations collector **33.** The vehicle operations collector **33** may be in communication with one or more sensors for obtaining sensor data relating to the operation of the vehicle **10.**

The one or more control units **42** may be in communication with a steering wheel angle sensor **24.** The steering wheel angle sensor **24** is configured to communicate, preferably in real time, an actual steering wheel angle which may define the current steering angle **S** to the one or more control units **42.** The one or more control units **42** may be configured to obtain the current steering angle **S** via the vehicle operations collector **33.** The vehicle operations collector **33** may be configured to obtain the current angle **S** from said steering wheel angle sensor **24.**

The one or more control units **42** may be in communication with a vehicle speed sensor **26.** The vehicle speed sensor **26** may be configured to communicate, preferably in real time, the actual vehicle speed **V** of the vehicle **10** to the one or more control units **42.** The vehicle speed sensor may be configured to communicate, preferably in real time, the current driving direction **D** of the vehicle **10.** The one or more control units **42** may be configured to obtain the current actual vehicle speed **V** and/or the current driving direction **D** via the vehicle operations collector **33.** The vehicle operations collector **33** may be configured to obtain the current actual vehicle speed **V** and/or the current driving direction **D** from said vehicle speed sensor **26.**

The one or more control units **42** is further in communication with a trailer angle sensor **28.** The trailer angle sensor **28** is configured to communicate, preferably in real time, the trailer angle **TA** to the one or more control units **12.** The one or more control units **42** may be configured to obtain the trailer angle **TA** via the vehicle operations collector **33.** The vehicle operations collector **33** may be configured to obtain the trailer angle **TA** from said trailer angle sensor **28.** In the event of the vehicle **10** comprising a plurality of trailers, the trailer angle sensor **28** may comprise a plurality of sensing devices such that said trailer angle sensor **28** is configured to communicate the trailer angle **TA** of each trailer of the vehicle **10.**

In one example, the one or more control units **42** may be configured to process the parameter data **410** to identify the trailer angle **TA** of one or more articulated trailers of the vehicle **10.** The one or more control units **42** may be configured to determine the pivot point **P** based on the trailer angle **TA.** In one example, the one or more control units **42** may be configured to process the operational data **OSD** to identify the trailer angle **TA.** In one example, the pivot point **P** may be determined based on the trailer angle **TA** and the current steering angle **S** and/or the current driving direction of the vehicle **10.**

The one or more control units **42** is further in communication with a yaw rate sensor **30.** The yaw rate sensor **30** is configured to communicate, preferably in real time, the actual yaw rate which may define the current steering angle **S** to the one or more control units **12.** The one or more control units **42** may be configured to obtain the current steering angle **S** via the vehicle operations collector **33.** The vehicle operations collector **33** may be configured to obtain the current angle **S** from said yaw rate sensor **30.**

The vehicle **10** may comprise a camera monitoring system **900.** The camera monitoring system **900** may be configured to monitor a zone in connection to the vehicle **10.** The one or more control units **42** may be configured to obtain an image feed **9000** from the camera monitoring system **900.** The one or more control units **42** may be configured to display the pivot point indicia **PI** as an overlay in the image feed **9000.** The one or more control units **42** may thus be in communication with the camera monitoring system **900.** The camera monitoring system **900** is configured to communicate the image feed **9000** to the one or more control units **42.** The image feed **9000** may typically comprise real time characteristics of the road ahead and/or behind the vehicle **10** such as lines and trajectory, as well as real time characteristics of the position of the vehicle **10** on the road.

In an example, the one or more control units **42** may be further configured to determine, preferably in real time, obstacle information **OI** from the image feed **9000.** Optionally, such obstacle information **OI** may be provided directly, preferably in real time, from the camera monitoring system **900,** as illustrated in **FIG. 3****.** The obstacle information **OI** may comprise information representing a presence of an obstacle on the road ahead of the vehicle **10** or behind the vehicle **10.**

In an example, the one or more control units **42** may be in communication with a map data system **20.** The map data system **20** is configured to communicate map data **MD** to the one or more control units **42.** The map data **MD** may typically comprise information relating to the road ahead of the vehicle **10,** such as road curvature, road width, road inclination and various dimensions of the road and surrounding buildings, etc. As the vehicle **10** is running, the map data **MD** is preferably updated in real time as the road ahead of the vehicle changes. In one example, the parameter data **410** may comprise map data **MD.** The one or more control unit **42** may be configured to process the parameter data to identify road data relating to the road on which the vehicle **10** is travelling. Such road data may include road inclination. The pivot point **P** of the vehicle may be determined based on said road data.

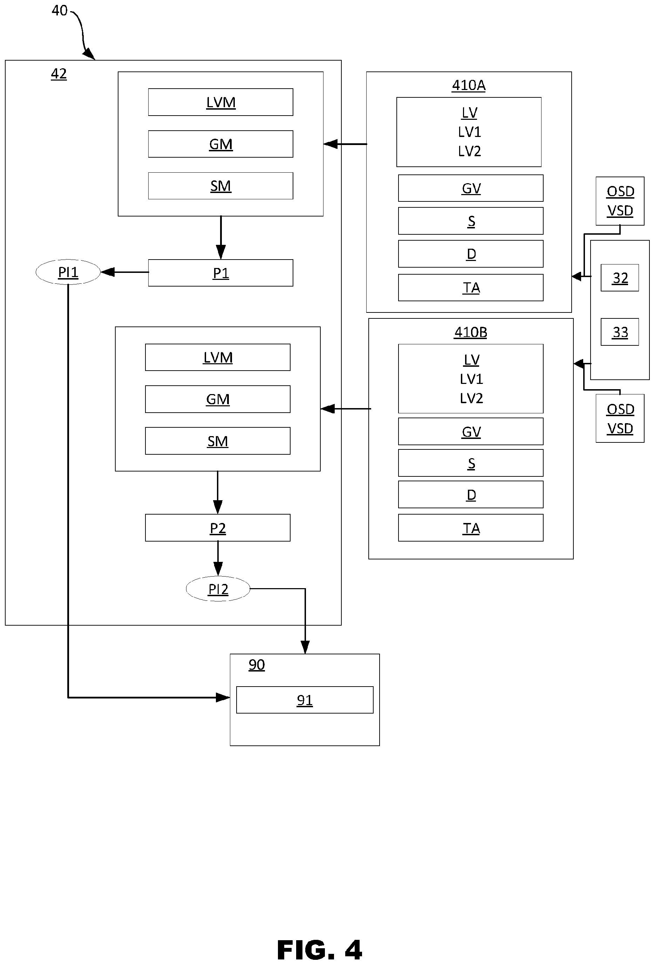

As will be described with reference to **FIG. 4****,** the data described with reference to **FIG. 2-3** may according to different examples be utilized for determining a pivot point **P** of the vehicle **10** and/or displaying a pivot point indicia **PI** associated with the pivot point **P.**

**FIG. 4** depicts a block diagram of an example of the control system of **FIG. 2-3****.** The one or more control units **42** of the control system **40** may be configured to execute the examples referenced herein.

In an example, the one or more control units **42** may be configured to process the parameter data **410** to identify one or more load indicator value **LV.** The load indicator value **LV** may be associated with the load distribution of the vehicle **10.** Based on the one or more load indicator value **LV,** the one or more control unit **42** may be configured to determine a load distribution model **LVM** of the vehicle **10.** The one or more control unit **42** may be configured to determine the pivot point **P** based on the load distribution model **LVM.** The one or more load indicator value **LV** be obtained from the vehicle operations collector **33** and/or the vehicle settings collector **32.** As depicted in **FIG. 4****,** a load distribution model **LVM** may be determined based on the first and second parameter data **410A-B,** respectively.

In an example, the parameter data may comprise the operational data **OSD** and the vehicle settings data **VSD** provided by the vehicle settings collector **32** and the vehicle operations collector **33.** The one or more control units **42** may be configured process the vehicle settings data and the operational data to identify load indicator values **LV** and determine the load distribution model **LVM** based on said load indicator values.

The one or more load indicator values **LV** may comprise at least one of a value associated with the type of wheel axles of the vehicle **10,** number of wheel axles of the vehicle **10,** the position of the wheel axles of the vehicle **10,** the load on the wheel axles of the vehicle **10,** the status of one or more liftable wheel axles of the vehicle **10,** the number of wheels of the vehicle **10** or the tire pressure of the tires of the vehicle **10.**

The one or more control units **42** may be configured to process the vehicle settings data **VSD** to identify the at least one value associated with the type of wheel axles of the vehicle **10,** number of wheel axles of the vehicle **10,** the position of the wheel axles of the vehicle **10** and/or the number of wheels of the vehicle **10.**

The one or more control units **42** may be configured to process the operational data **OSD** to identify the at least one value associated with the load on the wheel axles of the vehicle **10,** the status of one or more liftable wheel axles of the vehicle **10,** and/or the tire pressure of the tires of the vehicle **10.**

In one example, the one or more control units **42** may be configured to determine the load distribution model **LVM** based on load indicator values **LV** associated with the load on each wheel axle of the vehicle **10** and the weight of vehicle **10.** In one example, the load distribution model **LVM** may be based on the weight of the trailer **11** and the tractor **12.** In one example, the one or more control units **42** may be configured to obtain the weight of the vehicle **10,** and preferably the weight of the trailer **11** and the tractor **12,** from the vehicle settings collector **32** and obtain the load indicator values **LV** associated with the load on each wheel axle of the vehicle **10** from the vehicle operations collector **33.** The one or more control units **42** may be configured to determine load distribution model **LVM** based on said data and determine the pivot point **P** based on the load distribution model **LVM.** Changes in the load distribution of the vehicle **10** may be detected due to corresponding changes in the load distribution model **LVM** allowing for a new and changed pivot point to be determined.

The one or more control units **42** may be configured to process the parameter data **410** to identify one or more geometrical indicator value **GV.** The one or more geometrical indicator value **GV** may be associated with the geometry of the vehicle **10.** The one or more control units **42** may be configured to determine a geometrical model **GM** of the vehicle **10** based on the at least one geometrical indicator value **GV.** The one or more control units **42** may be configured to determine the pivot point **P** based on the geometrical model **GM.** The one or more geometrical indicator value may be obtained from the vehicle settings collector **32.** As depicted in **FIG. 4****,** a geometrical model **GM** may be determined based on the first and second parameter data **410A-B,** respectively. It may however be envisioned that the geometrical model **GM** is static and does not change between the first and second parameter data.

The one or more control units **42** may be configured process the vehicle settings data **VSD** to the one or more geometrical indicator value **GV** and determine the geometrical model **GM** based on said load indicator values.

The one or more geometrical indicator value **GV** may comprise at least one of a value associated with the length of the vehicle **10,** the width of the vehicle **10,** the dimensions of a trailer of the vehicle **10** etc.

In one example, the one or more geometrical indicator value **GV** may comprise the number tires or wheels of vehicle **10** and the relative position of each tire or wheel. The geometrical indicator values **GV** may thus comprise the position of each wheel or tire relative a coordinate system of the vehicle **10.** Due to the pivot point **P** being related to the points of engagement between the road and the vehicle **10** formed by the wheels/tires, the accuracy of the determined pivot point **P** may be increased by taking the position of each wheel or tire into account in the determining of the pivot point **P.**

Advantageously, the pivot point **P** is determined based on the geometrical model **GM** and the load distribution model **LVM.**

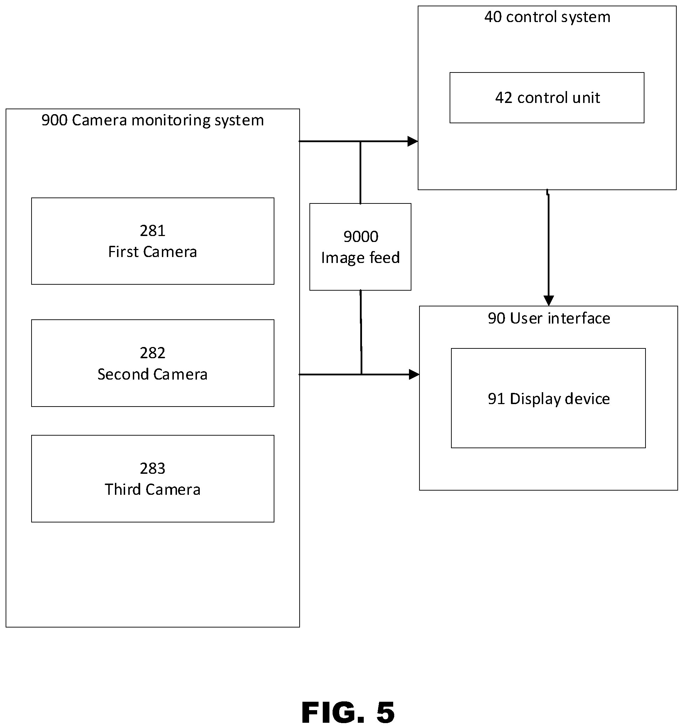

**FIG. 5** depicts aspects of a camera monitoring system according to an example. The camera monitoring system **900** may comprise one or more cameras **281-3.** The one or more cameras may be configured to monitor a zone at the vehicle **10.** The one or more cameras **281-3** may be configured to capture the image feed **9000.** As previously described, the camera monitoring system **9000** may be configured to communicate with the control system **40.** The camera monitoring system **9000** may be further configured to communicate with the user interface **90** to cause the display device **91** to present the image feed **9000.** The display device **91** may thus be configured to display the image feed **9000** obtained by the one or more cameras **281-3.**

In an example, the one or more control units **42** may be configured to display the pivot point indicia **PI,** e.g. the first pivot point indicia **PI1** and the second pivot point indicia **PI2,** as an overlay in the image feed **9000** via the display device **91.** The display device **91** may thus be configured to display the image feed **9000** with a graphical overlay based on said pivot point indicia **PI.**

In the depicted example, the camera monitoring system **900** comprises a first camera **281,** a second camera **282** and a third camera **283.** The first camera **281** may be configured to monitor a zone extending along a first longitudinal side of the vehicle **10.** The second camera **282** may be configured to monitor a zone extending along a second longitudinal side of the vehicle **10,** opposite to the first. The third camera **283** may be configured to monitor a zone at the rear side of the vehicle **10.** Of course, fewer or more cameras may be used.

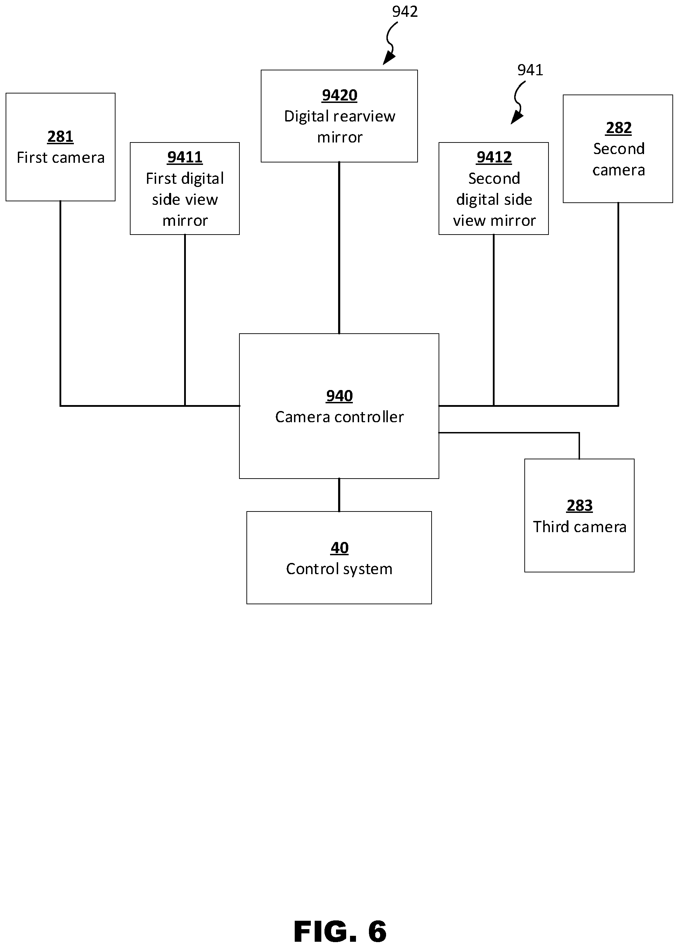

**FIG. 6** depicts a system diagram further depicting additional aspects of the camera monitoring system of **FIG. 5** of an example.

The camera monitoring system **900** may form a part of a digital side view mirror system **941** and/or a digital rearview mirror system **942.**

The digital rearview mirror **9420** of the digital rearview mirror system **942** and/or the one or more digital side view mirror **9411, 9412** may be configured to obtain and display the image feed 9000. The cameras of the camera monitoring system **900** may be positioned at any position suitable for monitoring the zones proximal to the vehicle **10.**

In one example, the first camera **281** may be configured to monitor a zone including a first longitudinal side of the vehicle **10.** A second camera **282** may be configured to monitor a zone including a second longitudinal side of the vehicle **10.** In the depicted example, the first camera **281** is operatively connected to a first digital side view mirror **9411** configured to display an image feed captured by the first camera **281.** The second camera **282** may be operatively connected to a second digital side view mirror **9412** configured to display an image feed captured by the second camera **282.** It may also be envisioned that a single camera may be utilized in order to monitor a zone including both said first and second longitudinal side of the vehicle **10.**

In one example, the third camera **283** may be configured to monitor a zone at the rear of the vehicle **10.** In the depicted example, the third camera **283** may be operatively connected to a digital rear view mirror **9420** configured to display an image feed captured by the third camera **283.**

The camera monitoring system **900** may comprise a camera controller **940** operatively connected to the one or more cameras **281-3** and the digital rear view mirror **9420** and/or the one or more digital side view mirrors **9411, 9412.** The camera controller **940** may be in communication with the control system **40** to send the image feed **9000** to the control system **40.** The camera controller **940** may comprise processing circuitry configured to obtain an image feed from each of the cameras of the camera monitoring system **900** and transmit said image feed to the control system **40** and to the one or more digital side rear view mirrors and/or digital rear view mirror.

The one or more digital side rear view mirror **9411, 9412** and/or digital rear view mirror **9420** may accordingly form a part of the user interface **91** previously referenced herein.

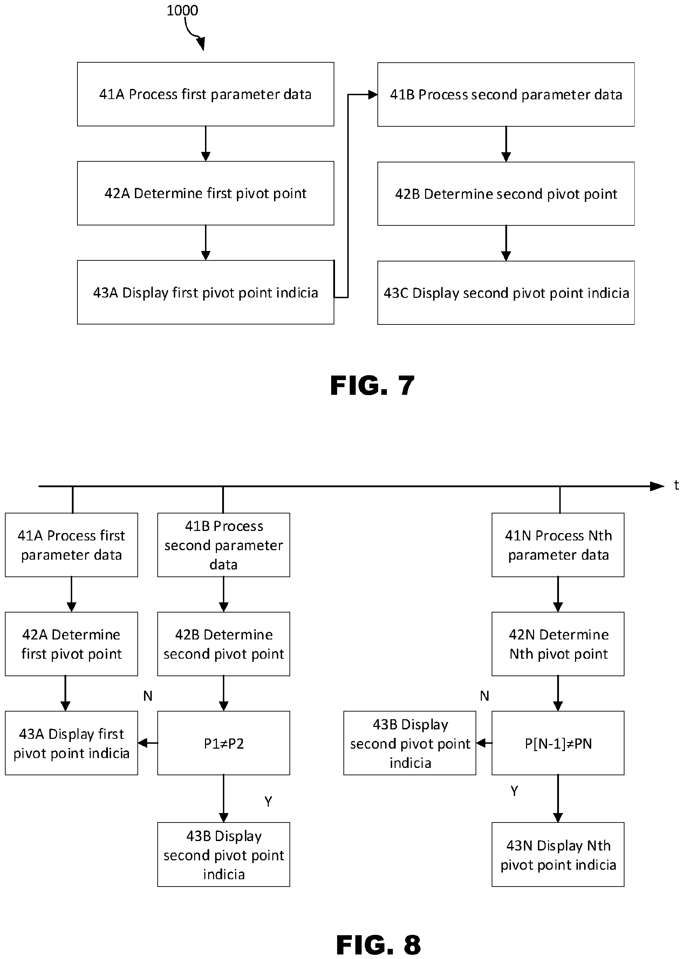

**FIG. 7** is a flow chart of a method **1000.** The method **1000** may be considered a method of determining a pivot point of a vehicle. The method **1000** comprises processing **41A,** by the processing circuitry **42, 702,** first parameter data **410A** associated with the vehicle **10** and the first operation of the vehicle **10** to determine **42A** a first pivot point **P1** of the vehicle **10.** The method **1000** further comprises displaying **43A,** by the processing circuitry **42,702,** the first pivot point indicia **PI1** associated with the first pivot point **P1.** The method further comprises **41B,** by the processing circuitry **42, 702,** second parameter data **410B** associated with the vehicle **10** and the second operation of the vehicle **10** to determine **42B** a second pivot point **P2** of the vehicle **10.** The second pivot point **P2** is changed from the first pivot point **P1.** The method **1000** further comprises displaying **43B,** by the processing circuitry **42, 702,** a second pivot point indicia **PI2** associated with the second pivot point **P2.**

**FIG. 8** is a flow chart of a method **1000** of determining a pivot point of the vehicle according to a more detailed example. The method comprises determining the pivot point for a number of points in time to keep track of the pivot point of the vehicle changing during operation of the vehicle.

Referencing **FIG. 8****,** the pivot point may be determined at a first point in time and a second pivot point at a second point in time. Responsive to the second pivot point **P2** being changed from the first pivot point **P1,** the second pivot point indicia **PI2** may be displayed. Responsive to the pivot point remaining unchanged, i.e. the first pivot point **P1** being identical to the second pivot point **P2,** the first pivot point indicia **PI1** is continued to be displayed.

The method may thus comprise to continuously determine the pivot point **P** to identify whether said pivot point **P** has changed. Responsive to a change in pivot point **P,** a pivot point indicia **PI** is displayed accordingly.

It may however be envisioned that the pivot point **P** is determined at a predefined frequency. Additionally or alternatively, the determining of the pivot point **P** may be triggered by the parameter data **410** for example indicating a loading/unloading operation changing the load distribution of the vehicle **10,** a change in driving direction of the vehicle **10** and/or a start of the vehicle **10.**

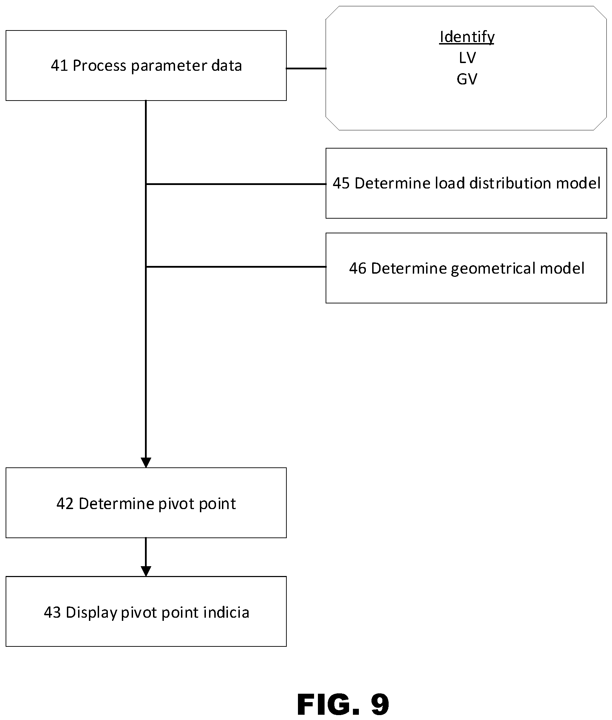

**FIG. 9** is a flow chart of a method **1000** of determining a pivot point of the vehicle according to a more detailed example.

The method **1000** may comprise processing **41A-B,** by the processing circuitry **42, 702,** the first and second parameter data **410A-B** to identify the current steering angle **S** of the vehicle **10** and the current driving direction **D** of the vehicle **10.** The method **1000** may further comprise determining, by the processing circuitry **42, 702,** the first pivot point **P1** and the second pivot point **P2** based on the current steering angle **S** and the current driving direction **D** of the vehicle **10.**

In an example, the method **1000** may comprise processing **41A-B,** by the processing circuitry **42, 702,** the first and second parameter data **410A-B** to identify one or more load indicator value **LV** associated with the current load distribution of the vehicle **10.** The method **1000** may further comprise determining **45A-B,** by the processing circuitry **42, 702,** a load distribution model **LVM** of the vehicle **10** based on the one or more load indicator value **LV** and determining **42A-B,** by the processing circuitry **42, 702,** the first pivot point **P1** and the second pivot point **P2** based on the load distribution model **LVM.**

In an example, the method **1000** may comprise processing **41A-B,** by the processing circuitry **42, 702,** the first and second parameter data **410A-B** to identify one or more geometrical indicator value **GV** associated with the geometry of the vehicle **10.** The method **1000** may further comprise determining **46A-B,** by the processing circuitry **42, 702,** a geometrical model **GM** of the vehicle **10** based on the one or more geometrical indicator value **GV.** The method **1000** may further comprise determining **42A-B,** by the processing circuitry **42, 702,** the first pivot point **P1** and the second pivot point **P2** based on the geometrical model **GM.**

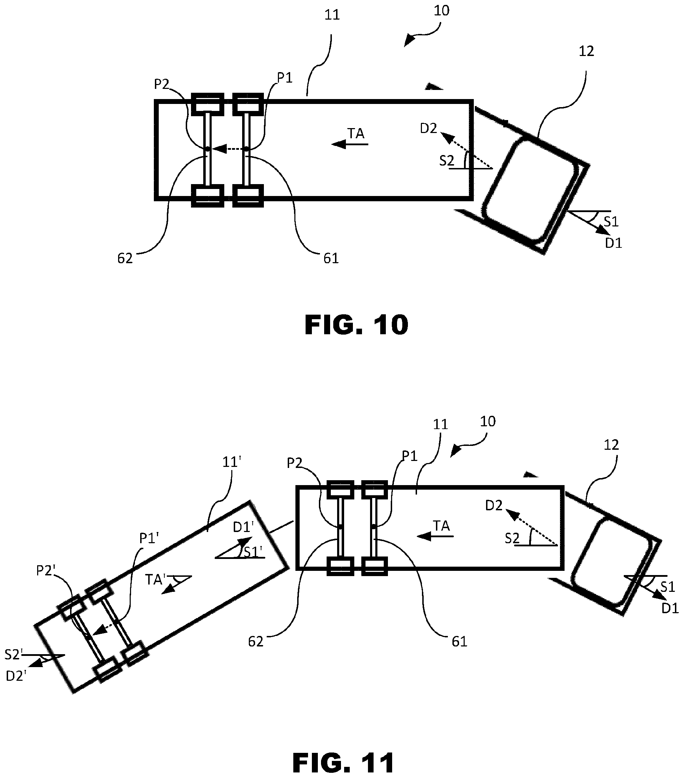

Now turning to **FIGS. 10-12** some examples of the method **1000** in operation will be described. In **FIG. 10****,** a vehicle **10** is travelling on a road. The vehicle **10** comprises an articulated trailer **11.** The vehicle **10** may comprise a control system **40** and one or more control unit **42** as described with reference to **FIGS. 2-4****,** configured to determine a pivot point **P** and display a pivot point indicia **PI.** The vehicle **10** comprises a trailer **11,** which may be an articulated trailer. In the depicted example, the trailer **11** comprises has at least two rear wheel axles **61, 62.**

At a first point in time, the vehicle **10** may travel in the driving direction **D1** and has a current steering angle **S1,** e.g. have a first driving direction **D1** and a first current steering angle **S1.** The control system **40,** e.g. the one or more control units **42,** may be configured to determine the pivot point **P** at the first point in time, e.g. the first pivot point **P1,** based on said driving direction **D1** and current steering angle **S1.** The control system **40,** e.g. the one or more control units **42,** may be configured to display a first pivot point indicia **PI2** associated with the first pivot point **P1** to provide the driver an indication of the first pivot point **P1.** To further improve the accuracy of the determined pivot point **P1** the trailer angle **TA,** e.g. a current trailer angle, of the trailer **11** may be taken into account.

At a second point in time, the vehicle **10** may start to reverse the vehicle. Thus, the driving direction and current steering angle changes. At the second point in time, the vehicle has a current steering angle **S2** and a driving direction **D2,** e.g. a second current steering angle **S2** and a second driving direction **D2.** The control system **40,** e.g. the one or more control units **42,** may be configured to determine the pivot point **P** at the second point time, e.g. the second pivot point **P2,** based on said driving direction **D2** and current steering angle **S2.** Due to the change in steering angle and driving direction, the pivot point of the vehicle **10** have shifted such that the second pivot point **P2** is distinguished from the first pivot point **P1.** In **FIG. 10****,** this change in pivot point from the first pivot point **P1** to the second pivot point **P2** is indicated by the dotted arrow. The control system **40,** e.g. the one or more control units **42,** may be configured to display a second pivot point indicia **PI2** associated with the second pivot point **P2** to prove the driver an indication of the second pivot point **P2.** To further improve the accuracy of the determined pivot point **P2** the trailer angle **TA,** e.g. a current trailer angle, of the trailer **11** may be taken into account.

Additionally or alternatively, to the above, the control system **40,** e.g. the one or more control units **42,** may be configured to process the parameter to identify a first load indicator value associated with the load on the first rear wheel axle **61** of the trailer **11** and a second load indicator value associated with the load on the second rear wheel axle **62.** The pivot point may be determined based on said first and second load indicator value. The load distribution between the first and second rear wheel axle **61, 62** may serve as an approximation of the load distribution of the vehicle **10** and in turn the where the pivot point of the vehicle **10** is located. At the first point in time, the first pivot point **P1** may be determined based on a first and second load indicator value associated with the load on the first and second rear wheel axle **61, 62,** respectively at the first point in time. At the second point in time, the second pivot point **P2** may be determined based on a first and second load indicator value associated with the load on the first and second rear wheel axle **61, 62** at the second point in time.

The control system **40,** e.g. the one or more control units **42,** may be configured to determining a first and second pivot point **P1, P2** for each articulated trailer **11** of the vehicle **10** and displaying a first and second pivot point **P1, P2** for each articulated trailer **11** of the vehicle **10.**

In **FIG. 11****,** the vehicle **10** comprises two articulated trailers. In **FIG. 11****,** a vehicle **10** is travelling on a road. The vehicle **10** comprises two articulated trailers **11** and **11'.** The vehicle **10** may comprise a control system **40** and one or more control unit **42** as described with reference to **FIGS. 2-4****,** configured to determine a pivot point **P** and display a pivot point indicia **PI.** The vehicle **10** comprises trailers **11** and **11',** which are two articulated trailers.

At a first point in time, the vehicle **10** travels in the driving direction **D1** and has a current steering angle **S1** and current trailers angles **TA** and **TA'.** The control system **40,** e.g. the one or more control units **42,** may be configured to determine the pivot point **P** at the first point in time, e.g. the first pivot point **P1,** based on said driving direction **D1** and current steering angle **S1** and potentially the trailers angles **TA** and **TA'.** The control system **40,** e.g. the one or more control units **42,** may be configured to display a first pivot point indicia **PI1** associated with the first pivot point **P1** to provide the driver an indication of the first pivot point **P1** of each of the trailers **11, 11'.**

At a second point in time, the vehicle **10** may start to reverse the vehicle. Thus, the driving direction and current steering angle and trailer angles change. At the second point in time, the vehicle has a current steering angle **S2** and a driving direction **D2** and trailers angles **TA** and **TA'.** The control system **40,** e.g. the one or more control units **42,** may be configured to determine the pivot point **P** at the second point time, e.g. the second pivot point **P2,** based on said driving direction **D2** and current steering angle **S2** and potentially the trailer angles **TA** and **TA'.** Due to the change in steering angle and driving direction, the pivot point of the vehicle **10** have shifted such that the second pivot point **P2** is distinguished from the first pivot point **P1.** In **FIG. 11****,** this change in pivot point from the first pivot point **P1** to the second pivot point **P2** is indicated by the dotted arrow. The control system **40,** e.g. the one or more control units **42,** may be configured to display a second pivot point indicia **PI2** associated with the second pivot point **P2** to prove the driver an indication of the second pivot point **P2** of each of trailers **11, 11'.**

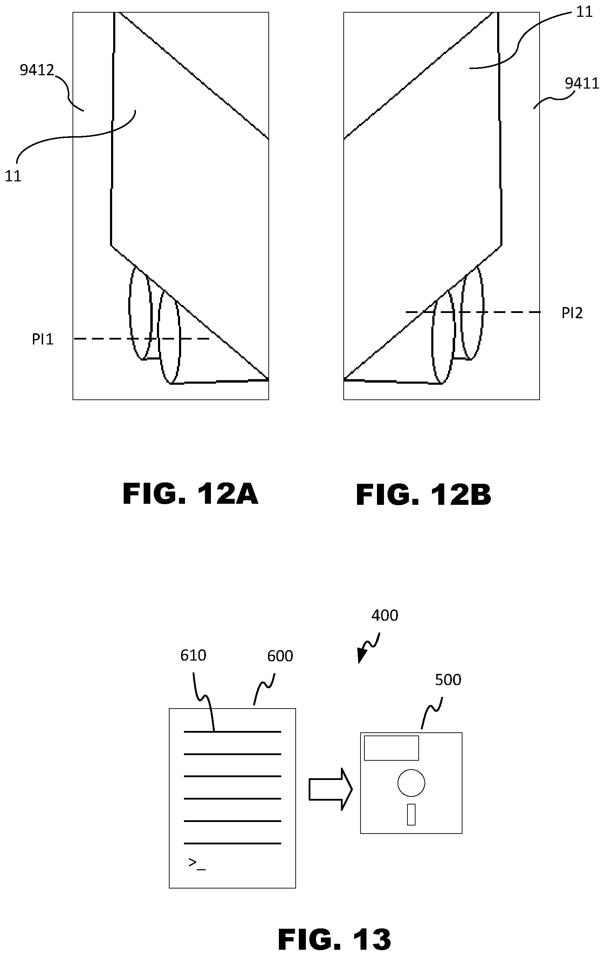

FIG. 12A-B depicts a driver's view in a digital side view mirror or a digital side view mirror system according to an example.

The display device which forms a part of the digital side view mirror system shows in image feed of a zone extending along a longitudinal side of the vehicle **10** and in this case the trailer **11** of the vehicle **10.**

In **FIG. 12A****,** the vehicle **10** may be moving forwards and may turn slightly to the right relative the longitudinal axis of the vehicle **10.** Based on the steering angle and the direction of the vehicle **10** a pivot point is determined and a pivot point indicia **PI1** is displayed. In the depicted example, the vehicle turns right, resulting in the pivot point indicia **PI1** being displayed as an overlay in the right digital side view mirror **9412.** In the depicted example, the pivot point indicia **PI1** is displayed in the form of a dotted line aligning with the determined pivot point of the vehicle **10.** It may however be envisioned that the pivot point indicia **PI1** may be provided in any form suitable for providing a driver an indication of the location of the pivot point.

In **FIG. 12B****,** the driver has started to reverse the vehicle **10** and turning slightly to the left relative the longitudinal axis of the vehicle **10.** Based on the steering angle and the direction of the vehicle **10** a pivot point is determined and a pivot point indicia **PI2** is displayed. In the depicted example, the vehicle turns left, resulting in the pivot point indicia **PI1** being displayed as an overlay in the left digital side view mirror **9411.** In the depicted example, the pivot point indicia **PI2** is displayed in the form of a dotted line aligning with the determined pivot point of the vehicle **10.**

In **FIG. 13** a computer program product **400** is shown. The computer program product **400** comprises a computer program **600** and a non-transitory computer readable medium **500.** The computer program **600** may be stored on the computer readable medium **500.** The computer readable medium **500** is, in **FIG. 11****,** exemplified as a vintage 5,25" floppy disc, but may be embodied as any suitable non-transitory computer readable medium such as, but not limited to, hard disk drives (HDDs), solid-state drives (SSDs), optical discs (e.g., CD-ROM, DVD-ROM, CD-RW, DVD-RW), USB flash drives, magnetic tapes, memory cards, Read-Only Memories (ROM), network-attached storage (NAS), cloud storage etc.

The computer program **600** comprises instruction **610** e.g. program instruction, software code, that, when executed by processing circuitry cause the processing circuitry to perform the method **1000** introduced with reference to **FIG. 7****-****FIG. 9****.**

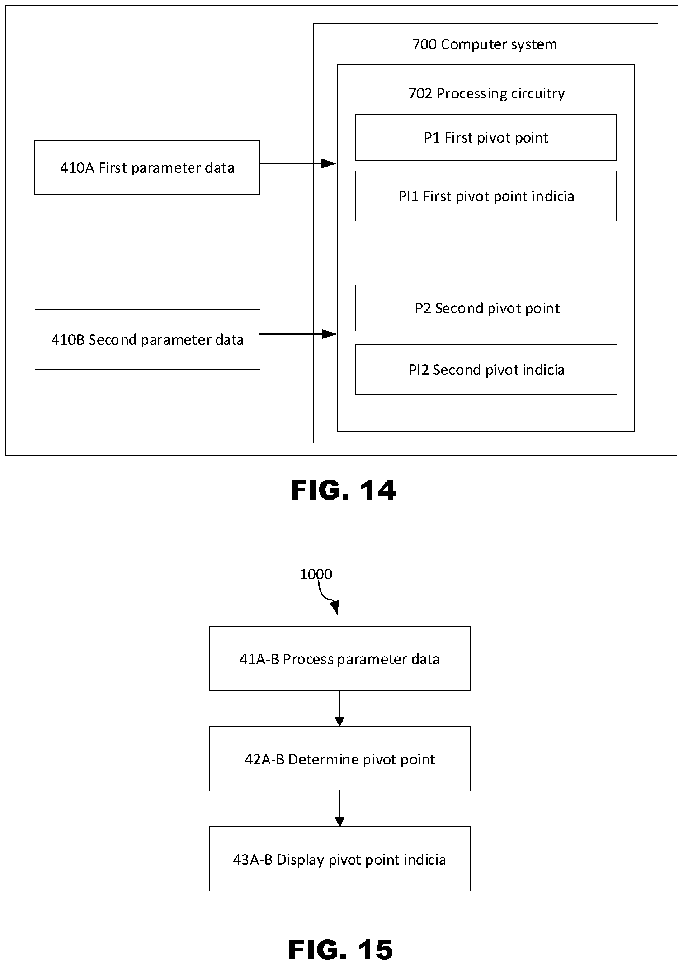

**FIG. 14** is another view of **FIG. 2****,** according to an example. **FIG. 14** depicts a computer system **700.** The computer system **700** may be implemented as the previously described control system **40.** The computer system **700** comprises processing circuitry **702** which may be implemented as the previously described one or more control units **42.** The processing circuitry **702** is configured to process first parameter data **410A** associated with the vehicle **10** and the first operation of said vehicle **10** to determine a first pivot point **P1** of the vehicle **10.** The processing circuitry **702** is configured to display a first pivot point indicia **PI1** associated with the first pivot point **P1.** The processing circuitry **702** is further configured to process second parameter data **410B** associated with the vehicle **10** and the second operation of said vehicle **10** to determine a second pivot point **P2** of the vehicle **10** changed from the first pivot point **P1.** The processing circuitry **702** is configured to display a second pivot point indicia **PI2** associated with the second pivot point **P2.**

**FIG. 15** is a flow chart of a computer-implemented method **1000** according to an example. The computer-implemented method comprises processing **41A,** by processing circuitry **702,** first parameter data **410A** associated with the vehicle **10** and the first operation of the vehicle **10** to determine **42A** a first pivot point **P1** of the vehicle **10** and displaying **43A,** by the processing circuitry **702,** a first pivot point indicia **PI1** associated with the first pivot point **P1.** The computer-implemented method **1000** further comprises processing **41B,** by the processing circuitry **702,** second parameter data **410B** associated with the vehicle **(10)** and the second operation of the vehicle **10** to determine **42B** a second pivot point **P2** of the vehicle **10** changed from the first pivot point **P2** and displaying **43B,** by the processing circuitry **702,** a second pivot point indicia **PI2** associated with the second pivot point **P2.**

**FIG. 16** is a schematic diagram of a computer system**700** for implementing examples disclosed herein. The computer system **700** is adapted to execute instructions from a computer-readable medium to perform these and/or any of the functions or processing described herein. The computer system **700** may be connected (e.g., networked) to other machines in a LAN, an intranet, an extranet, or the Internet. While only a single device is illustrated, the computer system **700** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **700** may comprise at least one computing device or electronic device capable of including firmware, hardware, and/or executing software instructions to implement the functionality described herein. The computer system **700** may include processing circuitry **702** (e.g., processing circuitry including one or more processor devices or control units), a memory **704,** and a system bus **706.** The computer system **700** may include at least one computing device having the processing circuitry **702.** The system bus **706** provides an interface for system components including, but not limited to, the memory **704** and the processing circuitry **702.** The processing circuitry **702** may include any number of hardware components for conducting data or signal processing or for executing computer code stored in memory **704.** The processing circuitry **702** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **702** may further include computer executable code that controls operation of the programmable device.

The system bus **706** may be any of several types of bus structures that may further interconnect to a memory bus (with or without a memory controller), a peripheral bus, and/or a local bus using any of a variety of bus architectures. The memory **704** may be one or more devices for storing data and/or computer code for completing or facilitating methods described herein. The memory **704** may include database components, object code components, script components, or other types of information structure for supporting the various activities herein. Any distributed or local memory device may be utilized with the systems and methods of this description. The memory **704** may be communicably connected to the processing circuitry **702** (e.g., via a circuit or any other wired, wireless, or network connection) and may include computer code for executing one or more processes described herein. The memory **704** may include non-volatile memory **708** (e.g., read-only memory (ROM), erasable programmable read-only memory (EPROM), electrically erasable programmable read-only memory (EEPROM), etc.), and volatile memory **710** (e.g., random-access memory (RAM)), or any other medium which can be used to carry or store desired program code in the form of machine-executable instructions or data structures and which can be accessed by a computer or other machine with processing circuitry **702.** A basic input/output system (BIOS) **712** may be stored in the non-volatile memory **708** and can include the basic routines that help to transfer information between elements within the computer system **700.**

The computer system **700** may further include or be coupled to a non-transitory computer-readable storage medium such as the storage device **714,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **714** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **714** and/or in the volatile memory **710,** which may include an operating system **716** and/or one or more program modules **718.** All or a portion of the examples disclosed herein may be implemented as a computer program **720** stored on a transitory or non-transitory computer-usable or computer-readable storage medium (e.g., single medium or multiple media), such as the storage device **714,** which includes complex programming instructions (e.g., complex computer-readable program code) to cause the processing circuitry **702** to carry out actions described herein. Thus, the computer-readable program code of the computer program **720** can comprise software instructions for implementing the functionality of the examples described herein when executed by the processing circuitry **702.** In some examples, the storage device **714** may be a computer program product (e.g., readable storage medium) storing the computer program **720** thereon, where at least a portion of a computer program **720** may be loadable (e.g., into a processor) for implementing the functionality of the examples described herein when executed by the processing circuitry **702.** The processing circuitry **702** may serve as a controller or control system for the computer system **700** that is to implement the functionality described herein.

The computer system **700** may include an input device interface **722** configured to receive input and selections to be communicated to the computer system **700** when executing instructions, such as from a keyboard, mouse, touch-sensitive surface, etc. Such input devices may be connected to the processing circuitry **702** through the input device interface **722** coupled to the system bus **706** but can be connected through other interfaces, such as a parallel port, an Institute of Electrical and Electronic Engineers (IEEE) 1394 serial port, a Universal Serial Bus (USB) port, an IR interface, and the like. The computer system **700** may include an output device interface **724** configured to forward output, such as to a display, a video display unit (e.g., a liquid crystal display (LCD) or a cathode ray tube (CRT)). The computer system **700** may include a communications interface **726** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

According to an aspect a computer system, vehicle and method according to any of the following examples is provided.

Example 1: A computer system **(700)** comprising processing circuitry **(702)** configured to process **(41A)** first parameter data **(410A)** associated with a vehicle **(10)** and a first operation of said vehicle **(10)** to determine **(42A)** a first pivot point **(P1)** of the vehicle **(10),** display **(43A)** a first pivot point indicia **(PI1)** associated with the first pivot point **(P1),** process **(41B)** second parameter data **(410B)** associated with the vehicle **(10)** and a second operation of said vehicle **(10)** to determine **(42B)** a second pivot point **(P2)** of the vehicle **(10)** changed from the first pivot point **(P1),** and display **(43B)** a second pivot point indicia **(PI2)** associated with the second pivot point **(P2).**

Example 2: The computer system **(700)** of example 1, wherein the vehicle **(10)** comprises a trailer **(11).**

Example 3: The computer system **(700)** of example 2, wherein the vehicle **(10)** comprises one or more articulated trailer **(11)** and the processing circuitry **(702)** is configured to determine **(42A-B)** a first and second pivot point **(P1, P2)** and display **(43A-B)** a first and second pivot point indicia **(PI1-2)** for each articulated trailer **(11).**

Example 4: The computer system **(700)** of any of examples 1-3, wherein the processing circuitry **(702)** is configured to process **(41A-B)** the first and second parameter data **(410A-B)** to identify a current steering angle **(S)** of the vehicle **(10)** and a current driving direction **(D)** of the vehicle **(10),** and wherein the processing circuitry **(702)** is configured to determine **(42A-B)** the first and second pivot point **(P1, P2)** based on the current steering angle **(S)** and the current driving direction **(D)** of the vehicle **(10).**

Example 5: The computer system **(700)** of any of examples 1-4, wherein the processing circuitry **(702)** is configured to process **(41A-B)** the first and second parameter data **(410A-B)** to identify one or more load indicator value **(LV)** associated with the load distribution of the vehicle **(10)** and based on said one or more load indicator value **(LV)** determine **(45A-B)** a load distribution model **(LVM)** of the vehicle **(10),** and wherein the processing circuitry **(702)** is configured to determine **(42A-B)** the first and second pivot point **(P1, P2)** based on said load distribution model **(LVM).**

Example 6: The computer system **(700)** of example 5, wherein the one or more load indicator value **(LV)** comprises at least one of a value associated with the type of wheel axles of the vehicle **(10),** number of wheel axles of the vehicle **(10),** the position of the wheel axles of the vehicle **(10),** the load on the wheel axles of the vehicle **(10),** the status of one or more liftable wheel axles of the vehicle **(10),** the number of wheels of the vehicle **(10)** or the tire pressure of the tires of the vehicle **(10).**

Example 7: The computer system **(700)** of example 5 or 6, wherein the vehicle **(10)** comprises a trailer **(11)** with at least two rear wheel axles **(61, 62)** and the processing circuitry **(702)** is configured to process **(41A-B)** the first and second parameter data **(41A-B)** to identify a first load indicator value **(LV1)** associated with the load on a first rear wheel axle **(61)** of the trailer **(11)** and a second load indicator value **(LV2)** associated with the load on a second rear wheel axle **(62)** of the trailer **(11)** and determine **(42A-B)** the first and second pivot point **(P1, P2)** based on said first and second load indicator value **(LV1, LV2).**

Example 8: The computer system **(700)** of any of examples 1-7, wherein the processing circuitry **(702)** is configured to process **(41A-B)** the first and second parameter data **(42A-B)** to identify one or more geometrical indicator value **(GV)** associated with the geometry of the vehicle **(10)** and based on said one or more geometrical indicator value **(GV)** determine **(46A-B)** a geometrical model **(GM)** of the vehicle **(10),** and wherein the processing circuitry **(702)** is configured to determine **(42A-B)** the first and second pivot point **(P1, P2)** based on said geometrical model **(GM).**

Example 9: The computer system **(700),** further comprising a user interface **(90)** comprising a display device **(91),** wherein the processing circuitry **(702)** is configured to display **(43A-B)** the first and second pivot point indicia **(PI1-2)** on said display device **(91).**

Example 10: A vehicle **(10)** comprising the computer system **(700)** of any one of examples 1-9.

Example 11: The vehicle **(10)** of example 10, further comprising a camera monitoring system **(900)** configured to monitor a zone in connection to the vehicle **(10)** and operatively connected to the computer system **(700),** wherein the processing circuitry **(702)** is configured to obtain an image feed **(9000)** from the camera monitoring system **(900)** and the processing circuitry **(702)** is configured to display **(43A-B)** the first and second pivot point indicia **(PI1-2)** as an overlay in said image feed **(9000).**

Example 12: The vehicle **(10)** of example 11, wherein the camera monitoring system **(900)** forms a part of a digital side view mirror system **(941)** and/or rearview mirror system **(942).**

Example 13: The vehicle **(10)** of any of examples 10-12, wherein the computer system **(700)** further comprises a user interface **(90)** comprising a display device **(91),** wherein the processing circuitry **(702)** is configured to display **(43A-B)** the first and second pivot point indicia **(PI1-2)** on said display device **(91),** the vehicle **(10)** further comprising a camera monitoring system **(900)** configured to monitor a zone in connection to the vehicle **(10)** and operatively connected to the user interface **(90),** wherein the display device **(91)** is configured to present an image feed from the camera monitoring system **(900)** and the processing circuitry **(702)** is configured to display the first and second pivot point indicia **(PI1-2)** as an overlay in said image feed **(9000),** wherein the camera monitoring system **(900)** forms a part of a digital side view mirror **(941)** and/or rearview mirror system **(942),** wherein the vehicle **(10)** comprises a trailer **(11)** and a tractor **(12),** wherein the trailer **(11)** is connected to the tractor **(12)** via an articulated connection, wherein the processing circuitry **(700)** is configured to process **(41A-B)** the first and second parameter data **(410A-B)** to identify a current steering angle **(S)** of the vehicle **(10)** and a current driving direction **(D)** of the vehicle **(10)** and identify one or more load indicator value **(LV)** associated with the current load distribution of the vehicle **(10)** and based on said one or more load indicator value **(LV)** determine a load distribution model **(LVM)** of the vehicle **(10),** whereby the processing circuitry **(702)** is configured to determine **(42A-B)** the first and second pivot point **(P1, P2)** based on the current steering angle **(S)** and the current driving direction **(D)** of the vehicle **(10)** and said load distribution model **(LVM).**

Example 14:A computer-implemented method **(1000)** comprising processing **(41A),** by processing circuitry **(702)** of a computer system **(700),** first parameter data **(410A)** associated with a vehicle **(10)** and a first operation of the vehicle **(10)** to determine **(42A)** a first pivot point **(P1)** of the vehicle **(10),** displaying **(43A),** by the processing circuitry **(702),** a first pivot point indicia **(PI1)** associated with the first pivot point **(P1),** processing **(41B),** by the processing circuitry **(702),** second parameter data **(410B)** associated with the vehicle **(10)** and a second operation of the vehicle **(10)** to determine **(42B)** a second pivot point **(P2)** of the vehicle **(10)** changed from the first pivot point **(P2),** and displaying **(43B),** by the processing circuitry **(702),** a second pivot point indicia **(PI2)** associated with the second pivot point **(P2).**

Example 15: The computer-implemented method **(1000)** of example 14, wherein the vehicle **(10)** comprises one or more articulated trailer **(11),** wherein the method further comprises determining **(42A-B),** by the processing circuitry **(702),** a first and second pivot point **(P1, P2)** for each articulated trailer **(11),** and displaying **(43A-B),** by the processing circuitry **(702),** a first and second pivot point indicia **(PI1-2)** for each articulated trailer **(11).**

Example 16: The computer-implemented method **(1000)** of example 14 or 15, further comprising processing **(41A-B),** by the processing circuitry **(702),** the first and second parameter data **(410A-B)** to identify a current steering angle **(S)** of the vehicle **(10)** and a current driving direction **(D)** of the vehicle **(10),** and determining **(42A-B),** by the processing circuitry **(702),** the first and second pivot point **(P1, P2)** based on the current steering angle **(S)** and the current driving direction **(D)** of the vehicle **(10).**

Example 17: The computer-implemented method **(1000)** of any of example 14-16, further comprising processing **(41A-B),** by the processing circuitry **(702),** the first and second parameter data **(410A-B)** to identify one or more load indicator value **(LV)** associated with the current load distribution of the vehicle **(10),** determining **(45A-B),** by the processing circuitry **(702),** a load distribution model **(LVM)** of the vehicle **(10)** based on the one or more load indicator value **(LV),** and determining **(42A-B),** by the processing circuitry **(702),** the first and second pivot point **(P1, P2)** based on the load distribution model **(LVM).**

Example 18:.The computer-implemented method **(1000)** of any of example 14-17, further comprising processing **(41A-B),** by the processing circuitry **(702),** the first and second parameter data **(410A-B)** to identify one or more geometrical indicator value **(GV)** associated with the geometry of the vehicle **(10),** determining **(46A-B),** by the processing circuitry **(702),** a geometrical model **(GM)** of the vehicle **(10)** based on said one or more geometrical indicator value **(GV)** and determining **(42A-B),** by the processing circuitry **(702),** the first and second pivot point **(P1, P2)** based on said geometrical model **(GM).**

Example 19: A computer program product **(600)** comprising program code **(610)** for performing, when executed by the processing circuitry **(702),** the method **(1000)** of any of examples 14-18.

Example 20: A non-transitory computer-readable storage medium **(500)** comprising instructions, which when executed by the processing circuitry **(702),** cause the processing circuitry **(702)** to perform the method **(1000)** of any of example 14-18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system **(700)** comprising processing circuitry **(702)** configured to:
- process **(41A)** first parameter data **(410A)** associated with a vehicle **(10)** and a first operation of said vehicle **(10)** to determine **(42A)** a first pivot point **(P1)** of the vehicle **(10);**
- display **(43A)** a first pivot point indicia **(PI1)** associated with the first pivot point **(P1);**
- process **(41B)** second parameter data **(410B)** associated with the vehicle **(10)** and a second operation of said vehicle **(10)** to determine **(42B)** a second pivot point **(P2)** of the vehicle **(10)** changed from the first pivot point **(P1),** and
- display **(43B)** a second pivot point indicia **(PI2)** associated with the second pivot point **(P2).**

2. The computer system **(700)** of claim 1, wherein the vehicle **(10)** comprises a trailer **(11).**

3. The computer system **(700)** of claim 2, wherein the vehicle **(10)** comprises one or more articulated trailer **(11)** and the processing circuitry **(702)** is configured to determine **(42A-B)** a first and second pivot point **(P1, P2)** and display **(43A-B)** a first and second pivot point indicia **(PI1-2)** for each articulated trailer **(11).**

4. The computer system **(700)** of any of claims 1-3, wherein the processing circuitry **(702)** is configured to process **(41A-B)** the first and second parameter data **(410A-B)** to identify a current steering angle **(S)** of the vehicle **(10)** and a current driving direction **(D)** of the vehicle **(10),** and wherein the processing circuitry **(702)** is configured to determine **(42A-B)** the first and second pivot point **(P1, P2)** based on the current steering angle **(S)** and the current driving direction **(D)** of the vehicle **(10).**

5. The computer system **(700)** of any of claims 1-4, wherein the processing circuitry **(702)** is configured to process **(41A-B)** the first and second parameter data **(410A-B)** to identify one or more load indicator value **(LV)** associated with the load distribution of the vehicle **(10)** and based on said one or more load indicator value **(LV)** determine **(45A-B)** a load distribution model **(LVM)** of the vehicle **(10),** and wherein the processing circuitry **(702)** is configured to determine **(42A-B)** the first and second pivot point **(P1, P2)** based on said load distribution model **(LVM).**

6. The computer system **(700)** of claim 5, wherein the vehicle **(10)** comprises a trailer **(11)** with at least two rear wheel axles **(61, 62)** and the processing circuitry **(702)** is configured to process **(41A-B)** the first and second parameter data **(41A-B)** to identify a first load indicator value **(LV1)** associated with the load on a first rear wheel axle **(61)** of the trailer **(11)** and a second load indicator value **(LV2)** associated with the load on a second rear wheel axle **(62)** of the trailer **(11)** and determine **(42A-B)** the first and second pivot point **(P1, P2)** based on said first and second load indicator value **(LV1, LV2).**

7. The computer system **(700)** of any of claims 1-6, wherein the processing circuitry **(702)** is configured to process **(41A-B)** the first and second parameter data **(42A-B)** to identify one or more geometrical indicator value **(GV)** associated with the geometry of the vehicle **(10)** and based on said one or more geometrical indicator value **(GV)** determine **(46A-B)** a geometrical model **(GM)** of the vehicle **(10),** and wherein the processing circuitry **(702)** is configured to determine **(42A-B)** the first and second pivot point **(P1, P2)** based on said geometrical model **(GM).**

8. A vehicle **(10)** comprising the computer system **(700)** of any one of claims 1-7.

9. The vehicle **(10)** of claim 8, further comprising a camera monitoring system **(900)** configured to monitor a zone in connection to the vehicle **(10)** and operatively connected to the computer system **(700),** wherein the processing circuitry **(702)** is configured to obtain an image feed **(9000)** from the camera monitoring system **(900)** and the processing circuitry **(702)** is configured to display **(43A-B)** the first and second pivot point indicia **(PI1-2)** as an overlay in said image feed **(9000).**

10. The vehicle **(10)** of any of claims 8-9, wherein the computer system **(700)** further comprises a user interface **(90)** comprising a display device **(91),** wherein the processing circuitry **(702)** is configured to display **(43A-B)** the first and second pivot point indicia **(PI1-2)** on said display device **(91),**
the vehicle **(10)** further comprising a camera monitoring system **(900)** configured to monitor a zone in connection to the vehicle **(10)** and operatively connected to the user interface **(90),**
wherein the display device **(91)** is configured to present an image feed from the camera monitoring system **(900)** and the processing circuitry **(702)** is configured to display the first and second pivot point indicia **(PI1-2)** as an overlay in said image feed **(9000),**
wherein the camera monitoring system **(900)** forms a part of a digital side view mirror (941) and/or rearview mirror system **(942),**
wherein the vehicle **(10)** comprises a trailer **(11)** and a tractor **(12),** wherein the trailer **(11)** is connected to the tractor **(12)** via an articulated connection,
wherein the processing circuitry **(700)** is configured to process **(41A-B)** the first and second parameter data **(410A-B)** to identify a current steering angle **(S)** of the vehicle **(10)** and a current driving direction **(D)** of the vehicle **(10)** and identify one or more load indicator value **(LV)** associated with the current load distribution of the vehicle **(10)** and based on said one or more load indicator value **(LV)** determine a load distribution model **(LVM)** of the vehicle **(10),**
whereby the processing circuitry **(702)** is configured to determine **(42A-B)** the first and second pivot point **(P1, P2)** based on the current steering angle **(S)** and the current driving direction **(D)** of the vehicle **(10)** and said load distribution model **(LVM).**

11. A computer-implemented method **(1000)** comprising;
- processing **(41A),** by processing circuitry **(702)** of a computer system **(700),** first parameter data **(410A)** associated with a vehicle **(10)** and a first operation of the vehicle **(10)** to determine **(42A)** a first pivot point **(P1)** of the vehicle **(10);**
- displaying **(43A),** by the processing circuitry **(702),** a first pivot point indicia **(PI1)** associated with the first pivot point **(P1);**
- processing **(41B),** by the processing circuitry **(702),** second parameter data **(410B)** associated with the vehicle **(10)** and a second operation of the vehicle **(10)** to determine **(42B)** a second pivot point **(P2)** of the vehicle **(10)** changed from the first pivot point **(P2),** and
- displaying **(43B),** by the processing circuitry **(702),** a second pivot point indicia **(PI2)** associated with the second pivot point **(P2).**

12. The computer-implemented method **(1000)** of claim 11, further comprising:
- processing **(41A-B),** by the processing circuitry **(702),** the first and second parameter data **(410A-B)** to identify a current steering angle **(S)** of the vehicle **(10)** and a current driving direction **(D)** of the vehicle **(10),** and
- determining **(42A-B),** by the processing circuitry **(702),** the first and second pivot point **(P1, P2)** based on the current steering angle **(S)** and the current driving direction **(D)** of the vehicle **(10).**

13. The computer-implemented method **(1000)** of any of claim 11-12, further comprising:
- processing **(41A-B),** by the processing circuitry **(702),** the first and second parameter data **(410A-B)** to identify one or more load indicator value **(LV)** associated with the current load distribution of the vehicle **(10);**
- determining **(45A-B),** by the processing circuitry **(702),** a load distribution model **(LVM)** of the vehicle **(10)** based on the one or more load indicator value **(LV);** and
- determining **(42A-B),** by the processing circuitry **(702),** the first and second pivot point **(P1, P2)** based on the load distribution model **(LVM).**

14. A computer program product **(600)** comprising program code **(610)** for performing, when executed by the processing circuitry **(702),** the method **(1000)** of any of claims 11-13.

15. A non-transitory computer-readable storage medium **(500)** comprising instructions, which when executed by the processing circuitry **(702),** cause the processing circuitry **(702)** to perform the method **(1000)** of any of claim 11-13.
